Europäisches Patentamt

European Patent Office

Office européen des brevets

(19)

(11) Publication number: **0 009 393**
**B1**

(12) **EUROPEAN PATENT SPECIFICATION**

(45) Date of publication of patent specification: **21.07.82**

(51) Int. Cl.³: **F 15 B 9/08** //B60T13/24

(21) Application number: **79301933.2**

(22) Date of filing: **19.09.79**

(54) Pneumatic force multiplying device.

(30) Priority: **20.09.78 JP 128822/78**
**20.09.78 JP 128825/78**
**29.09.79 JP 133801/78**
**29.09.79 JP 133802/78**
**20.10.78 JP 144197/78**

(43) Date of publication of application:
**02.04.80 Bulletin 80/7**

(45) Publication of the grant of the patent:
**21.07.82 Bulletin 82/29**

(84) Designated Contracting States:
**DE FR GB IT**

(73) Proprietor: **TOKICO LTD.**
**6-3, Fujimi, 1-Chome Kawasaki-Ku**
**Kawasaki-shi Kanagawa-ken (JP)**

(72) Inventor: **Hamamatsu, Seiji**
**43-3, Kitazawa 1-Chome Setagaya-Ku**
**Tokyo (JP)**
Inventor: **Ando, Hiromi**
**1-14-12, Takadanobaba Shinjuku-Ku**
**Tokyo (JP)**

(74) Representative: **Jones, Colin et al,**
**W.P. THOMPSON & CO. Coopers Building Church**
**Street**
**Liverpool L1 3AB (GB)**

(56) References cited:
**DE - C - 519 699**
**FR - A - 1 396 672**
**FR - A - 1 518 064**
**FR - A - 2 406 551**
**GB - A - 1 214 893**
**GB - A - 1 363 243**
**US - A - 1 788 378**
**US - A - 2 265 546**

(56) References cited:
**US - A - 2 608 061**
**US - A - 2 667 861**
**US - A - 2 719 405**
**US - A - 2 745 383**
**US - A - 3 525 289**

Courier Press, Leamington Spa, England.

Pneumatic force multiplying device

This invention relates to a pneumatic force multiplying device such as vacuum servomotor or the like, which is particularly adapted for use in a hydraulic braking system of a vehicle.

Conventional vacuum servomotors, such as disclosed in GB—A—1 363 243, comprise a housing defined by a front shell and rear shell, a valve body slidably supported by the rear shell and incorporating therein a valve mechanism, a flexible diaphragm connected to the circumference of the valve body and extending in the radial direction toward the circumference of the housing to divide the interior of the housing into a front chamber and a rear chamber, and a piston plate mounted on the valve body and extending contiguous to the diaphragm. When a vacuum servomotor of the aforesaid kind is used in a vehicle hydraulic braking system a master cylinder is rigidly secured to the front shell by means of bolts or the like and the rear shell of the servomotor is rigidly connected to a toe-board (a plate partitioning a driver's compartment from an engine room) according to usual practice. In such a case, the housing of the servomotor has to receive the force acting on the master cylinder and when the strength and rigidity of the housing of the servomotor are insufficient, discrepancies have been experienced such that the housing of the booster is deformed, that the effective stroke of the booster and hence the master cylinder is reduced.

It is possible to overcome discrepancies aforementioned by increasing the thickness of the shells constituting the housing. However, there are problems such that the weight of the booster will increase and that the amount of the material for fabricating the housing will also increase.

An object of the present invention is to provide a novel pneumatic force multiplying device solving the problems aforementioned. The invention resides in providing at least one rigid connecting rod which extends through the front and rear chambers and the opposite ends of the connecting rod are rigidly connected to respective shells thus preventing unwanted deflections.

Preferably, two or more connecting rods are provided each of which are in equally spaced relationship both in the radial and circumferential directions with respect to the longitudinal axis of the device.

The connecting rod may slidably and sealingly pass through the diaphragm and pass through the piston plate but, alternatively the connecting rod may slidably and sealingly pass through an opening formed in the valve body.

The invention will now be described further hereinbelow by way of example only with reference to the accompanying drawings, in which:

Fig. 1 is a longitudinal sectional view of a pneumatic force multiplying device according to the invention;

Fig. 2 is a perspective view of a C-ring utilized in the device of Fig. 1;

Fig. 3 is a longitudinal sectional view of a second embodiment of the invention;

Fig. 4 is an enlarged partial view showing a portion of Fig. 2;

Fig. 5 is a view similar to Fig. 4 but showing a modified form;

Fig. 6 is an enlarged partial view showing a portion of Fig. 3;

Fig. 7 is a view similar to Fig. 6 but showing a modified form;

Fig. 8 is a partial view showing a seal member; and

Fig. 9 is a longitudinal sectional view of a third embodiment of the invention.

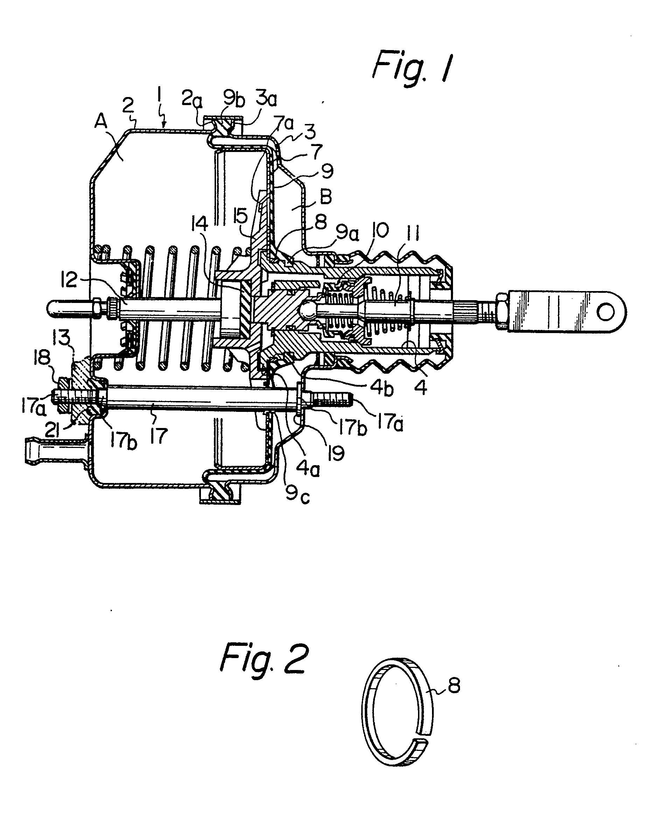

The pneumatic force multiplying device illustrated in Fig. 1 comprises a housing defined by a front shell 2 and a rear shell 3, and a valve body 4 slidably supported by the rear shell 3. The valve body 4 has a flange portion 4a on the front end thereof, and an annular groove 4b which is spaced rearward from the flange portion 4a by a predetermined distance. A generally dish-like shaped piston plate 7 having a central opening is mounted on the valve body 4 with the inner circumferential portion of the opening thereof being clamped between the flange portion 4a and a C-shaped ring 8 (Fig. 2) which is fitted in the annular groove 4b. A flexible diaphragm 9 is bonded to the rear surface of the piston plate 7 with the inner circumferential portion 9a tightly fitting with the outer circumference of the valve body 4 and the outer circumferential portion 9b being clamped between flange portions 2a and 3a of respective shells 2 and 3. The diaphragm 9 divides the interior of the housing into a front chamber A and a rear chamber B. The valve body 4 incorporates therein a valve mechanism 10 for effecting the force multiplying action of the device. For actuating the valve mechanism 10 there is provided an input rod 11 which is retained in the valve body 4. The rear end of the input rod 11 projects out of the valve body and is adapted to be connected to a brake pedal (not shown) or the like. An out-put rod 12 projects through the end wall of the front shell 2 and is adapted to be connected to a piston or the like of a master cylinder (not shown) which is connected to the front shell 2 through a spacer 13. The rear end of the output rod 12 is slidably received in a disc holder 15 and receives therefrom the output force of the device through an elastic disc 14. The disc holder 15 is secured to the piston plate 7 by means of a plurality of circumferentially spaced pawls 7a which are formed on the piston plate 7 by cutting and bending operations and engage respectively with the outer circumference of the disc holder 15. The valve body 4, the diaphragm 9, the piston plate 7 and the disc holder 15 constitute an integral subassembly.

According to the invention, there are provided three connecting rods 17 which are spaced symmetrically both in the radial and circumferential directions with respect to the longitudinal axis of the device (only one is shown in Fig. 1). Each connecting rod 17 extends through the front shell 2, the piston plate 7, the diaphragm 9 and the rear shell 3. A reduced diameter portion 17a having a screw-threaded portion on the outer end thereof is formed on each end of the connecting rods 17 and an outwardly facing shoulder 17b is defined at the step in the diameter between the reduced diameter portion and the main body portion of the connecting rod 17. The reduced diameter portion 17a extends, on the front end of each of the connecting rods 17, through an opening formed in the front shell 2 and through the spacer 13. A nut 18 engages with the screw-threaded portion of the connecting rod 17 thereby securing the spacer 13 to the front shell 2. In the embodiment, the master cylinder (not shown) is fixedly supported on the spacer 13. On the rear end of each connecting rod 17, the reduced diameter 17a extends through an opening formed in the rear shell 3 and through an opening formed in a toe-board (not shown) of a vehicle, and engages with a nut (not shown), thus, the rear shell 3 is rigidly connected to the toe-board, whereby the pneumatic force multiplying device and the master cylinder are rigidly mounted on a chassis or stress bearing member of the vehicle. The connecting rod 17 extends through respective openings formed in the piston plate 7 and the diaphragm 9 which partition the chambers A and B. A lip seal 9c is integrally formed on the diaphragm 9 to sealingly and slidably engage with the connecting rod 17. On the front end of the connecting rod 17 there is provided an annular seal member 21 to seal from the atmosphere the chamber A which is a vacuum chamber as shown in the embodiment. On the rear end of the connecting rod there is provided a washer 19 welded on the inner wall of the rear shell 3 to tightly engage with the shoulder 17b of the connecting rod to seal the chamber B. If desired, a suitable gasket or the like may be provided between the shoulder 17b and the washer 19.

In operation, the input rod 11 moves forward in response to the depression of a brake pedal (not shown), the valve mechanism 10 is actuated to, firstly, disconnect the communication between the chambers A and B and, secondly, connect the chamber B with the atmosphere. Thus, a differential pressure is generated across the piston plate 7 and the diaphragm 9, and the piston plate 7, the diaphragm 9, the valve body 4 and the disc holder 15 integrally move forward whereby a multiplied force is transmitted through the output rod 12 to the master cylinder. The reaction of the force in the output rod 12 is transmitted to the input rod 11 through the elastic disc 14. The reaction of the force generated in the master cylinder is transmitted through the connecting rods 17 to the chassis member of the vehicle and not through the front and rear shells 2 and 3.

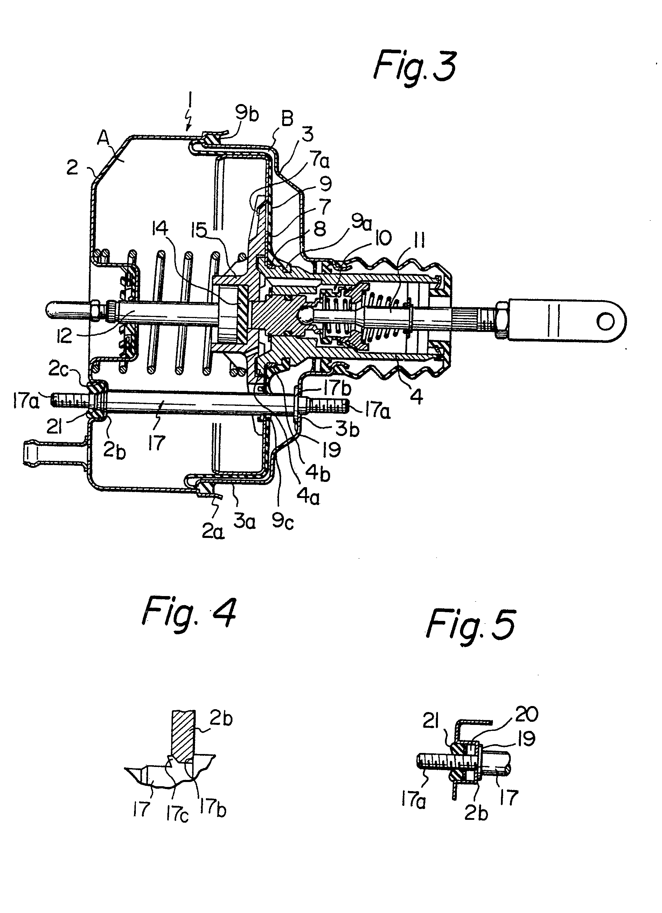

The embodiment shown in Figs. 3 and 4 is generally similar to the first embodiment and corresponding numerals have been applied to corresponding parts.

The connecting rods 17 are integrally connected to the front shell 2 as shown in Fig. 4. Specifically, the shoulder 17b on the forward end of each of the connecting rods 17 is tightly pressed against the inner wall of a portion 2b surrounding the opening of the front shell 2 by forming a projection 17c under a caulking process or the like. Alternatively, the caulking process may be substituted by a nut 20 engaging with the connecting rod 17 as shown in Fig. 5. The connecting rods 17 of the embodiment of Fig. 3 further act to tightly connect the front and rear shell 2 and 3, so that the outer circumferential portion 9b of the diaphragm 9 is simply clamped between the end portions 2a and 3a of the front and rear shells 2 and 3. Thus, it is possible to omit conventional connecting ring such as shown in Fig. 1 thereby reducing the outer diameter of the device.

Since the connecting rods 17 are integrally connected to the front shell 2, the assembling operation of the booster including the assembling operation of the shells can be performed very easily.

Alternatively, the connecting rods are integrally secured to the rear shell 3 and releasably connected to the front shell 2.

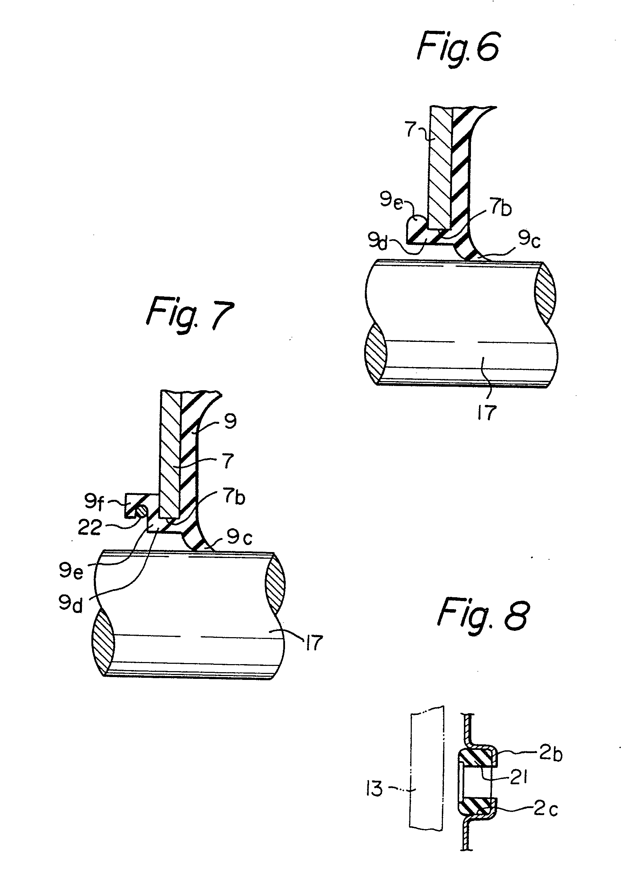

Fig. 6 shows the detailed construction of the lip portion 9c of the diaphragm 9 in the embodiments of Figs. 1 and 3.

An annular lip portion 9c integrally formed on the diaphragm 9 slidably and sealing engages with the connecting rod 17. A bore 7b is formed in the piston plate 7 for freely passing therethrough the connecting rod 17. The diaphragm 9 further has a sleeve-like portion 9d extending through the bore 7b and tightly engaging with the inner circumference of the bore 7b, and a flange-like portion 9e extending radially outward from the sleeve-like portion 9d for engaging the surface portion of the piston plate surrounding the bore 7b. The sleeve-like portion 9d and the flange-like portion 9e constitute a retaining portion for retaining the lip portion 9c in its proper position with respect to the piston plate 7 thus assuring the sealing characteristics of the lip portion 9c.

Fig. 7 shows a modified form, in which the flange-like portion 9e of the dipahragm 9 is modified to define an annular recess 9f for receiving therein an annular resilient ring 22, whereby the retaining portion of the diaphragm 9 is reliably retained on the piston plate 7, thus the relative position of the lip portion 9c and the piston plate 7 can reliably be maintained.

In the embodiments of Figs. 6 and 7, the flange-like portion 9e of the diaphragm may not necessarily have an annular configuration.

Fig. 8 shows the details of the seal member 21 in the embodiment of Fig. 1. As shown in Fig. 8, a recessed portion 2c is formed in the end wall of the front shell 2, and the seal member 21 received in the recessed portion 2c has an axial length larger than the depth of the recessed portion 2c. Thus, when the reduced diameter portion 17a of the connecting rod 17 is inserted through the front shell 2, the seal member 21 and the spacer 13, and when the nut 18 is tightly applied, the front shell 2 and the spacer 13 are tightly connected and the seal member 21 assures that the chamber A is effectively sealed.

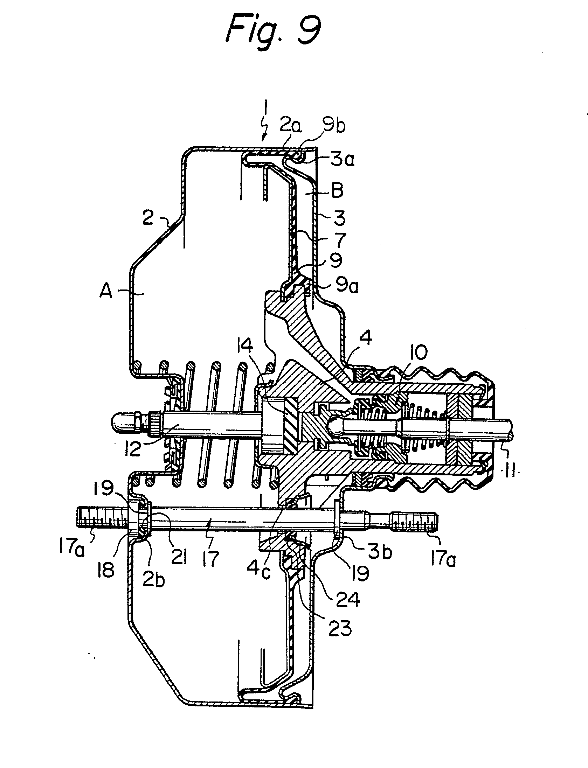

Fig. 9 shows another embodiment wherein the connecting rods (only one is shown in the drawing) extend through the valve body, but the general construction is similar to the embodiments of Figs. 1 and 3, thus, corresponding numerals have been applied to corresponding parts.

In the embodiment, the flange portion 4a of the valve body 4 has an increased diameter and a plurality of openings 4c are formed therethrough to receive the connecting rods 17. The piston plate 7 and the diaphragm 9 are secured to the outer circumference of the flange portion 4a. A seal member 23 and an annular retainer 24 are mounted on the valve body 4 to slidably seal the clearance between each of the openings 4c and the connecting rod 17 passing therethrough. In the embodiment of Fig. 9, the disc holder 15 in the embodiments of Figs. 1 and 3 is omitted and the rear end of the output rod 12 is received in a bore formed in the forward end of the valve body 4.

As described heretofore in detail, the pneumatic force multiplying device according to the invention comprises a rigid connecting rod extending through the front and rear shells with the opposite ends thereof being connected to respective shells, thus it is possible to prevent the deformation of the shells thereby maintaining the desired characteristics during long period of usage.

Further, since the force acting on the shells can substantially be reduced, the shells may be formed of a material the thickness of which being thinner than that of conventional shells and, further, the shells can be formed of a synthetic resin or the like, thus the fabricating cost of the booster can further be reduced.

Further, the front and rear shells are connected by the connecting rods, thus, it is possible to omit the connecting means, such as the connecting ring shown in Fig. 1 or the like, and the assembly operation can be performed easily.

## Claims

1. A pneumatic force multiplying device comprising a housing defined by a front shell (2) and a rear shell (3), a valve body (4) slidably supported by the rear shell and having therein a valve mechanism (10), a flexible diaphragm (9) connected to the circumference of the valve body and extending in the radial direction toward the outer circumference of the housing to divide the interior of the housing into a front chamber (A) and a rear chamber (B), and a piston plate (7) mounted around the valve body and extending contiguous to the diaphragm, characterized in that a rigid connecting rod (17) extends through both chambers with the opposite ends thereof being rigidly connected to respective shells.

2. A pneumatic force multiplying device as claimed in claim 1 in which at least two connecting rods (17) are provided each of which are in equally spaced relationship both in the radial and circumferential directions with respect to the axis of the device.

3. A pneumatic force multiplying device as claimed in claim 2, in which the front and rear shells are clamped together interposing therebetween the outer circumference of said diaphragm by said connecting rods.

4. A pneumatic force multiplying device as claimed in any preceding claim in which the connecting rod further extends slidably and sealingly through the valve body.

5. A pneumatic force multiplying device as claimed in any of claims 1 to 3 in which the connecting rod further extends through the piston plate and sealingly through the diaphragm.

6. A pneumatic force multiplying device as claimed in claim 2 in which a bore (76) is formed in the piston plate for freely passing the connecting rod therethrough and the diaphragm has an integrally formed lip portion (9c) sealingly and slidably engaging with the connecting rod and a retaining portion projecting through said bore of the piston plate, said retaining portion including a sleeve-like portion (9d) engaging with the inner circumference of the bore and a flange-like portion (9e) extending radially outwardly with respect to the bore.

7. A pneumatic force multiplying device as claimed in any preceding claim in which a recess (2b) is formed in the outer wall of at least one shell for receiving therein an annular resilient seal (21) encircling the connecting rod.

## Revendications

1. Dispositif pneumatique de multiplication de force comprenant un logement défini par une enveloppe avant (2) et une enveloppe arrière (3), un corps de vanne (4) supporté coulissant par l'enveloppe arrière et contenant un mécanisme de vanne (10), une membrane flexible (9) connectée à la circonférence du corps de vanne et s'étendant contiguë à la membrane, vers la circonférence externe du logement pour diviser l'intérieur du logement en une chambre avant (A) et une chambre arrière (B), et une plaque de piston (7) montée autour du corps de vanne et s'étendant contiguë à la membrane, caractérisé en ce qu'une tige rigide de connexion (17) traverse les deux chambres avec ses extrémités opposées rigidement connectées aux enveloppes respectives.

2. Dispositif pneumatique de multiplication de force selon la revendication 1 où au moins deux tiges de connexion (17) sont prévues, qui sont en relation également espacée à la fois en direction radiale et circonférencielle par rapport à l'axe du dispositif.

3. Dispositif pneumatique de multiplication de force selon la revendication 2, où les enveloppes avant et arrière sont bloquées l'une à l'autre avec interposition, entre elles, de la circonférence externe de ladite membrane par lesdites tiges de connexion.

4. Dispositif pneumatique de multiplication de force selon l'une quelconque des revendications précédentes, où la tige de connexion s'étend de plus coulissante et de façon étanche à travers le corps de vanne.

5. Dispositif pneumatique de multiplication de force selon l'une quelconque des revendications 1 à 3, où la tige de connexion traverse de plus la plaque de piston et de façon étanche, la membrane.

6. Dispositif pneumatique de multiplication de force selon la revendication 2, où un alésage (76) est formé dans la plaque de piston pour le passage libre de la tige de connexion et la membrane a une partie formant rebord (9c) intégralement formée, en engagement étanche et coulissant avec la tige de connexion et une partie de retenue faisant saillie à travers ledit alésage de la plaque de piston, ladite partie de retunue ayant une partie en forme de manchon (9d) engageant la circonférence interne de l'alésage et une partie en forme de bride (9e) s'étendant radialement vers l'extérieur par rapport à l'alésage.

7. Dispositif pneumatique de multiplication de force selon l'une quelconque des revendications précédentes, où un évidement (2b) est formé dans la paroi externe d'au moins une enveloppe pour recevoir un joint annulaire élastique (21) entourant la tige de connexion.

**Patentansprüche**

1. Pneumatischer Kraftverstärker mit einem durch eine vordere Schale (2) und eine hintere Schale (3) begrenzten Gehäuse, einem Ventilkörper (4), der verschiebbar durch die hintere Gehäuseschale gelagert ist und einen Ventilmechanismus (10) aufweist, einer mit dem Umfang des Ventilkörpers verbundenen flexiblen Membran (9), die sich radial in Richtung des Außenumfangs des Gehäuses erstreckt und das Gehäuseinnere in eine vordere Kammer (A) sowie eine hintere Kammer (B) unterteilt, und einer Kolbenplatte (7), die um den Ventilkörper herum angeordnet ist und sich angrenzend an die Membran erstreckt, dadurch gekennzeichnet, daß sich durch beide Kammern eine starre Verbindungsstange (17) erstreckt, deren beide Enden starr mit den jeweiligen Gehäuseschalen verbunden sind.

2. Kraftverstärker nach Anspruch 1, dadurch gekennzeichnet, daß wenigstens zwei Verbindungsstangen (17) vorgesehen sind, die jeweils sowohl in radialer Richtung als auch in Umfangsrichtung in bezug auf die Achse des Kraftverstärkers in gleichem Abstand voneinander angeordnet sind.

3. Kraftverstärker nach Anspruch 2, dadurch gekennzeichnet, daß die beiden Gehäuseschalen unter Zwischenschaltung des Außenumfangs der Membran durch die Verbindungsstangen zusammengehalten sind.

4. Kraftverstärker nach einem der Ansprüche 1 bis 3, dadurch gekennzeichnet, daß sich die Verbindungsstange verschiebbar und abgedichtet auch durch den Ventilkörper hindurch erstreckt.

5. Kraftverstärker nach einem der Ansprüche 1 bis 3, dadurch gekennzeichnet, daß sich die Verbindungsstange auch durch die Kolbenplatte sowie abgedichtet durch die Membran hindurch erstreckt.

6. Kraftverstärker nach Anspruch 2, dadurch gekennzeichnet, daß in der Kolbenplatte eine Bohrung (7b) vorgesehen ist, durch die hindurch sich die Verbindungsstange frei erstreckt, und daß die Membran ein einstückig hieran angeformtes Lippenteil (9c), das abgedichtet und verschiebbar mit der Verbindungsstange in Eingriff steht, sowie ein sich durch die Bohrung der Kolbenplatte hindurch erstreckendes Halteteil aufweist, das ein mit dem Innenumfang der Bohrung in Eingriff stehendes hülsenähnliches Teil (9d) sowie ein in bezug auf die Bohrung radial nach außen verlaufendes flanschähnliches Teil (9e) umfaßt.

7. Kraftverstärker nach einem der Ansprüche 1 bis 6, dadurch gekennzeichnet, daß die Außenwand wenigstens einer Gehäuseschale eine Ausnehmung (2b) aufweist, die eine die Verbindungsstange umgebende elastisch federnde Ringdichtung (21) aufnimmt.

0 009 393

# Fig. 1

# Fig. 2

1

Fig. 3

Fig. 4

Fig. 5

*Fig. 6*

*Fig. 7*

*Fig. 8*

# Fig. 9